# EUROPEAN PATENT SPECIFICATION

(11) **EP 4 141 396 B1**
(45) Date of publication and mention of the grant of the patent: **16.10.2024**
(21) Application number: 21193152.2
(22) Date of filing: 26.08.2021
(51) Int. Cl.: G02B 6/44, G01J 5/02, G01J 5/0821, G01K 1/14, G01K 1/12, G01J 5/00

(54) **MEASURING APPARATUS AND METHOD FOR MEASURING THE TEMPERATURE OF A MOLTEN METAL BATH WITH AN OPTICAL DEVICE**
MESSGERÄT UND VERFAHREN ZUR TEMPERATURMESSUNG EINES METALLSCHMELZBADES MIT EINER OPTISCHEN VORRICHTUNG
APPAREIL DE MESURE ET PROCÉDÉ DE MESURE DE TEMPÉRATURE DE BAIN DE MÉTAL FONDU À L'AIDE D'UN DISPOSITIF OPTIQUE

(43) Date of publication of application: 01.03.2023
(73) Proprietor: Heraeus Electro-Nite International N.V., 3530 Houthalen (BE)
(72) Inventor: Janssen, Gert, 3530 Houthalen (BE); Van Vlierberghe, Michel, 3530 Houthalen (BE); Vranckx, Luc, 3530 Houthalen (BE)
(74) Representative: Heraeus IP

(56) References cited:
- EP-A1- 3 051 262
- AU-C1- 2014 250 666

## Description

The present invention relates to a measuring apparatus for measuring the temperature of a molten metal bath, comprising an optical device, a detecting means, which is adapted to receive a light signal transmitted by the optical device, a storing unit for the optical device, a rotatable support for the storing unit for the optical device, a moving means, a straightening means, a housing, and a guiding system connected to the housing. The optical device comprises an optical fiber laterally surrounded by an inner and an outer metal tube, wherein the outer metal tube has an outer diameter in the range of 2 mm to 8 mm and a wall-thickness in the range of 0.1 mm to 0.6 mm.

The housing encloses the detecting means, the storing unit for the optical device, the rotatable support for the storing unit of the optical device, the moving means, and the straightening means. The moving means is adapted to feed and retract the optical device and comprises at least one motor for forward and backward driving the rotatable support for the storing unit for the optical device and a feeding means for feeding the optical device driven by at least one motor for forward and backward driving. The invention also relates to a method using a corresponding measuring apparatus for measuring the temperature of a molten metal bath.

The temperature of a molten metal bath in a metallurgical vessel is a critical parameter during the metal making process, which determines the quality of the resulting product. Typically, a temperature measurement of the molten metal is accomplished using well known immersion thermocouples such as described in US 2993944 A. Such thermocouples can be immersed manually by an operator with a steel pole with adapted electrical wiring and connections to convey the thermocouple signal to appropriate instrumentation. Additionally, many automatic thermocouple immersion mechanical systems are now utilized to provide thermocouple immersions A further possible means for measuring the temperature of the molten metal bath, particularly of iron or steel in a melting environment of an electric arc furnace (EAF), involves immersing an optical fiber into the molten metal. The optical fiber may be provided as a virtually endless fiber which is wound on a coil and unwound for conducting a measurement. For measuring the temperature of the molten metal bath, such an optical fiber is fed into the metallurgical vessel, from where it can convey thermal radiation received from the molten metal to a detector, where the optical signal is converted to a temperature value. After a measurement, the optical fiber can be retracted.

The accuracy of the obtained results and a distortion-free operation of such measurements depends on several parameters.

One critical parameter is the condition of the optical fiber at the point in time when the measurement is taken. In the harsh environment of the measurement situation in a metallurgical facility, the optical fiber is exposed to degrading circumstances. Therefore, such an optical fiber is typically surrounded by a protective cover, for example a metal tube. An optical fiber surrounded by a metal tube is often also referred to as optical cored wire or a fiber in metal tube (FIMT). Optical devices comprising such optical fibers and further protective means, such as an additional metal tube or an additional layer of protecting material, have been developed and are for example disclosed in US 2007268477 A1 and JP H10176954 A . Depending on the design of such an optical device, the protective means shield the optical fiber efficiently from thermal influences but can still be sensitive to other external physical factors.

Another critical part of a measurement process has been found to be the precise feeding of the optical device. Feeding includes the acceleration and deacceleration and is defined by the final speed. Especially optical devices with relatively small cross-sections and thin metal tubes are sensitive to friction and impact effects leading to a damage of the optical fiber within the optical device. Furthermore, these kinds of optical devices need to be fed fast enough in order to reach an adequate immersion depth in the molten metal bath prior to their decomposition and damage due to the measuring environment. This requires high feeding speeds and high acceleration and deacceleration rates. Thus, these fragile optical devices provide additional challenges for the technical equipment of the immersion devices.

An exemplary immersion device for the feeding of optical devices is described in EP 3051262 A1. The optical device, in particular a FIMT, is fed from a coil by means of two motor-driven feeders through an immersed guiding tube, the device is also suited to retract the optical device. A constant tension is applied by means of a load. While the described invention solves the problem of a possible spring-back when the optical device is retracted, it applies high tensional forces to the wire, which can result in damages. Furthermore, the system lacks autonomy since every measurement requires a new shielding tube and the is demanding in terms of its space requirements. AU 2014 250 666 C1 discloses a very similar device for feeding of optical devices, which comprises a section capable of straightening the optical device.

A solution which also requires a constant tension on the optical device is disclosed in JP H09101206 A. The immersion device comprises two feeding means which are adapted for a forward and backward feeding and which are operated sequentially and independent of each other. The device further comprises a looper, over which the optical device is guided during its immersion.

Typically, immersion devices are installed in some distance to the vessel containing the molten metal, since the available space near the vessel is restricted and the environment is demanding in terms of temperature and potentially device damaging incidents. Optical devices of the new generation are less robust against the influences it can be exposed to in in such environments, therefore a protected positioning as near to its location of operation is desired.

EP 1966573 A1 for example addresses the problem of thermal load on measurement systems by arranging the components in a thermally insulated housing. The disclosed device is space demanding and needs to be placed in distance to the vessel.

In view of the prior art, there is the need for a measuring apparatus allowing a precise immersion of a fragile optical device to obtain results with a high accuracy and a method of using it.

The objective of the invention is thus to provide a measuring apparatus for measuring a temperature of a molten metal bath which solves at least one of the problems discussed above. In particular, one of the objects is to provide a measuring apparatus which allows the immersion of a fragile optical device with a minimal amount of friction and torsion on the device and its inner optical fiber with high accuracy and control. Furthermore, it is an objective to provide a measuring apparatus which ensures the measurement with the optical device at a constant point of the surface of the molten metal bath in repeated immersion cycles. An additional aspect of the objective of the present invention is to provide a measuring apparatus which minimizes the amount of unprotected optical device during the immersion and thus operates reliably independent of the circumstances accompanying the measurement. A further aspect addressed by the invention is to provide a measuring apparatus which allows an operation with low maintenance.

A further object of the invention is to provide a method utilizing the measuring apparatus to measure a temperature of a molten metal bath.

These objects are attained by the subject-matter defined in the independent claims.

The invention provides a measuring apparatus for measuring the temperature of a molten metal bath, comprising an optical device, a detecting means, which is adapted to receive a light signal transmitted by the optical device, a storing unit for the optical device, a rotatable support for the storing unit for the optical device, a moving means, a straightening means, a housing and a guiding system connected to the housing. The optical device comprises an optical fiber laterally surrounded by an inner and an outer metal tube, wherein the outer metal tube has an outer diameter of in the range of 2 mm to 8 mm and a wall-thickness in the range of 0.1 mm to 0.6 mm. The housing encloses the detecting means, the storing unit for the optical device, the rotatable support for the storing unit for the optical device, the moving means, and the straightening means. The moving means is adapted to feed and retract the optical device and comprises at least one motor for forward and backward driving the rotatable support for the storing unit for the optical device and a feeding means for feeding the optical device driven by at least one motor for forward and backward driving.

Furthermore, the invention provides a method for measuring the temperature of a molten metal bath with a measuring apparatus according to the invention.

Preferred embodiments are defined in the dependent claims.

In the environment of a metallurgical facility, especially when an electric arc furnace (EAF) is employed, the requirements for frequent reliable temperature measurements are very high. During the processing of the molten metal, a variety of problems may occur, which can impact an installed measuring apparatus and a measurement conducted with it. These problems include events and effects inside the metallurgical vessel, as for example an inhomogeneous metal melt with unmolten parts, outside the vessel, in the guiding system or even magnetic and electric field effects. In operation, the vessel containing the metal melt cannot be approached, neither for inspection nor for intervention.

Surprisingly it has been found that the data quality of a measurement depends on the compatibility of an optical device with the moving means utilized for its movement and the respective configuration in relation to the further components of the measuring apparatus. By "quality" in this context it is referred to the obtained measurement accuracy compared to data acquired by the application a standard immersion thermocouple. The measuring apparatus according to the invention has been proven to be especially suitable for feeding and retracting an optical device with a relatively thin outer metal sheath without exposing the optical device to tensional, frictional or bending forces.

A measurement usually comprises a sequence of steps, during which the optical device is first moved towards and into a metal melt where a measurement is conducted and subsequently away from the metal melt with several speeds and during several time periods. Especially the feeding, retracting and recoiling of an optical device which is supplied on a movable arranged storing unit has been identified as factor which significantly influences the reliability of the obtainable data. The measuring apparatus according to the invention allows the application of a wide range of sophisticated measurement schemes required for different circumstances occurring in a metallurgical facility with fast changes between feeding velocities and directions.

Additionally, the inventive configuration of the components of the measuring apparatus leads to an apparatus which is undemanding in terms of maintenance.

The invention provides a measuring apparatus for measuring the temperature of a molten metal bath.

As used herein, the term "molten metal bath" is used to describe a melt in a furnace, in particular in a vessel. An alternative term for "molten metal bath" known to a skilled person is "metal melt". The molten metal of the molten metal bath is not particularly restricted. According to a preferred embodiment, the molten metal is molten steel. The term molten metal bath does not exclude the presence of any solid or gaseous parts, including for example non-molten parts of the respective metal. The molten metal bath may be covered with a slag layer. The term "slag" refers to non-steel byproducts that are often produced in a steel making furnace and are typically present as a molten material that floats on top of the molten metal. Slag may comprise metal oxides, metal sulfides, calcium oxide, magnesium oxide, magnesite, dolomite, iron oxide, aluminum oxide, manganese oxide, silica, sulfur, phosphorous, or a combination thereof.

The temperature of metal melts differs and usually depends on the composition of the metal and the stage of the melting process. According to a preferred embodiment, the temperature of the molten metal bath is in the range of 1500 - 1800 °C and more preferably in the range of 1500 - 1700 °C.

The molten metal bath of which the temperature shall be measured is located in a vessel, in particular the vessel of an electric arc furnace.

The measuring apparatus according to the invention comprises an optical device, which comprises an optical fiber laterally surrounded by an inner and an outer metal tube i.e. at least two metal tubes surround the optical fiber laterally.

Preferably, the optical fiber is a flexible, transparent fiber. Optical fibers are most often used as means to transmit light, especially in the IR wavelength range, between the two ends of the fiber. Preferably, the optical fiber is formed from glass or plastic, more preferably from quartz glass. Preferably, the optical fiber is selected from the group consisting of graded index fibers and single-mode step index fibers.

The optical fiber is laterally surrounded by an inner metal tube. Preferably, the optical fiber is centrally arranged in the inner metal tube.

The inner metal tube can encircle the optical fiber fully or it can be at least partially open so that the casing is not fully encircling the optical fiber.

Preferably, the metal of the inner metal tube laterally surrounding the optical fiber is iron, steel or stainless steel, in particular stainless steel of grade 304 or 316.

Preferably, the inner metal tube has an outer diameter in the range of 1 mm to 3 mm. The wall thickness of the inner metal tube can be in the range of 0.1 mm to 0.3 mm.

The optical fiber is also laterally surrounded by an outer metal tube, which has an outer diameter of in the range of 2 mm to 8 mm and a wall-thickness in the range of 0.1 mm to 0.6 mm.

Preferably, the outer diameter of the outer metal tube is in the range of 2 mm to 7 mm, more preferred in the range of 3 mm to 6 mm.

Preferably, the wall-thickness of the outer metal tube is in the range of 0.2 mm to 0.6 mm, more preferred in the range of 0.2 mm to 0.5 mm.

Preferably, the metal of the outer metal tube surrounding the optical fiber is iron or steel or stainless steel, in particular stainless steel of grade 304 or 316.

Preferably, the inner metal tube is centrally arranged in the outer metal tube.

Preferably, the outer metal tube is not in contact with the inner metal tube. More preferably, the void space between these at least two metal tubes is at least partially filled with a material selected from the group consisting of gaseous or solid materials or a combination thereof. The solid material is preferably selected from the group consisting of inorganic materials, natural polymers, synthetic polymers and combinations thereof. The gaseous material is preferably a gas or a mixture of gases. More preferably, the gas is air or an inert gas.

According to a preferred embodiment, the optical device comprises a plurality of separating elements arranged around the inner metal tube and in the outer metal tube, forming at least one compartment between the separating elements. Here, the term "compartment" relates to the volume between the different separating elements in the outer metal tube. The term "separating elements" relates to parts arranged inside the outer metal tube subdividing the volume within the outer metal tube. Preferably, separating elements are disc-shaped elements that are arranged inside the outer metal tube comprising an opening, through which the optical fiber and the inner metal tube are extending. The material of the separating elements is preferably selected from the group consisting of silicone, preferably two-component silicone, rubber, leather, cork, metal and combinations thereof.

In a preferred embodiment, the inner metal tube surrounding the optical fiber is surrounded by a further layer. According to a particular preferred element, the further layer comprises a plurality of pieces, preferably fibers.

In a further preferred embodiment, the material of the at least one additional layer has the form of a web, a net, a woven or a knitted structure.

Preferably, the at least one additional layer comprises a non-metallic material, most preferably an organic material.

In a preferred embodiment the linear density of the optical device is in the range of 25 - 80 g/m, more preferably in the range of 35 - 70 g/m. The linear density is defined by the mass per unit length.

It is to be understood that the optical device can comprise any combination of the above described configurations.

The total length of the optical device can be in the range of 300 m to 1000 m. Since the optical device is consumed during measurements, it shortens during operation of the measuring apparatus, typically by a length of 30 to 70 cm per measurement sequence, depending on the temperature of the molten metal bath and the measurement protocol applied.

Accordingly, the optical device has an immersion end and an opposite end. The leading tip of the optical device is the tip of the immersion end of the optical device, i.e. the leading tip of the optical device is the end which is immersed into the molten metal bath in order to measure the temperature.

When the measuring apparatus is operated, the optical device is consumed in the direction from the immersion end towards the opposite end and after each measuring sequence, another portion of the optical device will be the immersion end; i.e. the leading tip is newly generated after each measurement sequence. The term "consumption" as used herein refers to a disintegration of the optical device, such as for example the melting and dissolution of the optical device by and into the molten metal bath, a decomposition or burning of the whole optical device or its different components, and the like. The opposite end can be connected to the detecting means and will not be consumed during a measurement. In a typical measurement scenario, the radiation emitted by the molten metal bath, especially in the IR wavelength range, is conveyed by the optical fiber of the optical device to the detecting means. The intensity and/or spectral information of the radiation may be processed by a processing unit connected to the detecting means to obtain the temperature of the molten metal. The processing unit can be attached to a human-machine interface, for example a monitor and a keyboard.

The measuring apparatus furthermore comprises a detecting means.

The detecting means is preferably coupled to the optical device, in particular to the opposite end of the optical device. The detecting means is adapted to receive a light signal, in particular in the IR wavelength range, transmitted by the optical device.

Preferably, the detecting means is a detector, in particular a pyrometer.

The detecting means can comprise electrical contacts. The electrical contacts are preferably configured to be connected to the storing unit for the optical device.

Preferably, the detecting means is connected to means for converting a received signal, in particular an analog-to-digital (AD) converter.

The detecting means can further comprise power supply means.

Additional means can be arranged between the optical device and the detecting means when they are coupled, for example mode filters or fiber organizers.

The measuring apparatus also comprises a storing unit for the optical device.

Preferably, the storing unit for the optical device is rotationally symmetric. For example, the storing unit for the optical device can be a coil, a reel, a spool, a drum or a cartridge.

The dimension of the storing unit for the optical device can be characterized by its outer diameter and/or its outer circumference. Preferably, the storing unit for the optical device has an outer diameter in the range of 40 to 80 cm, more preferred in the range of 50 cm to 70 cm.

The storing unit for the optical device typically comprises a cylindrical core. The cylindrical core can be characterized by its outer circumference and/or its diameter. The storing unit for the optical device can also comprise further components, as for example disc shaped or ringshaped side panels, installed on both sides of the cylindrical core. Such panels can have the same or a larger diameter than the cylindrical core, in the latter case building a rim which extends from the cylindrical core. In such cases, the outer diameter of the storing unit for the optical device is larger than the diameter of the cylindrical core of the storing unit for the optical device. The panels may or may not take the form of a grid.

Preferably, the cylindrical core of the storing unit for the optical device has a diameter in the range of 30 to 70 cm, more preferred in the range of 35 cm to 65 cm, most preferred in the range of 40 to 60 cm.

The storing unit can be hollow, i.e. comprise an internal space. In other words, the storing unit can comprise a tube-shaped part.

Preferably, the optical device is arranged at least partly on the storing unit for the optical device, preferably on a cylindrical core of the storing unit for the optical device. The portion of the optical device arranged on the storing unit is referred to as the coiled portion of the optical device. The portion of the optical device not arranged on the storing unit is referred to as the uncoiled portion of the optical device.

During operation of the measuring apparatus, the optical device is fed and retracted, which also causes an uncoiling and recoiling of portions of the optical device, in other words, the coiled portion and the uncoiled portion of the optical device constantly change during operation.

The uncoiled portion of the optical device can define the immersion path of the optical device, i.e. the "immersion path" of the optical device can be defined as the route which is passed by each increment of the uncoiled portion of the optical device. In other words, the immersion path begins at the storing unit of the optical device and ends at the leading tip of the optical device. It is to be understood, that the immersion path is predominantly determined by the components and means of the measuring apparatus through which the optical device is guided and fed. Preferably, the immersion path begins inside the housing at the storing unit for the optical device and leads through the feeding means, the straightening means and the guiding system. Thus, a first section of the immersion path is located inside the housing and a second section of the immersion path is located outside the housing. In particular, the second section is located inside the guiding system. After leaving the guiding system, the immersion path can comprise at least one further section. During operation of the measuring apparatus, this at least one further section can in particular be the section between the outlet of the guiding system and the point where the leading tip of the optical device is immersed into the molten metal bath.

Preferably, the first two sections of the immersion path are fully enclosed within the housing and the guiding system. In other words, the uncoiled portion of the optical device is fully covered by components of the measuring apparatus until it leaves the outlet of the guiding system. Thus, a maximal protection and control of the optical device can be provided during operation.

Preferably, the immersion path does not comprise sections which are kinked. In other words, the immersion path is curved without the presence of kinks.

Preferably, the immersion path does not comprise a curvature with a radius smaller than 200-times the outer diameter of the optical device. The radius of a curvature is defined by the radius of an imaginary circle which best approximates a curve at a point. Such a configuration allows an immersion of the optical device without excessive bending and the application of related forces which could lead to a plastic deformation and damages.

The coiled portion of the optical device can be arranged on the storing unit for the optical device in a wound manner. In other words, the coiled portion of the optical device is arranged in at least one winding, preferably in multiple windings, on the storing unit for the optical device. In such a configuration, the coiled portion of the optical device comprises an inner winding and an outer winding and optionally windings in-between. The inner winding can also be referred to as first winding and the outer winding can also be referred to as last winding. It is to be understood, that the diameter of the inner winding can correspond to the diameter of a cylindrical core of the storing unit for the optical device.

Preferably, the immersion path starts at the end of the outer winding, i.e. at the point from which the optical device is no longer arranged on the storing unit. Preferably, the diameter of the inner winding of the optical device is equal to or smaller than the diameter of the outer winding of the optical device.

Preferably, the windings of the optical device are arranged in superimposed layers on the storing unit for the optical device. Preferably, the inner layer comprises the inner winding and the outer layer comprises the outer winding. It can be preferred that the uncoiled portion of the optical device originates from the outer layer. In other words, the immersion path of the optical device starts from the outermost portion of the optical device arranged on the storing unit. Thus, when the optical device is moved by the moving means along the immersion path, it is moved from the outermost point of the coiled portion of the optical device on the storing unit. This configuration ensures a controlled feeding and retracting of the optical device during operation.

In a preferred embodiment, the opposite end of the optical device is connected to the storing unit for the optical device, in other words, the optical device has a fixed end connected to the storing unit and a free end. During operation of the measuring apparatus, the free end will be the leading tip of the optical device and the fixed end will be the opposite end.

It can be preferred, that the storing unit for the optical device is exchangeable. Thus, it can be replaced after the optical device was consumed during operation of the measuring apparatus.

The storing unit for the optical device can comprise the detecting means, in other words, the detecting means is arranged on, in or at the storing unit for the optical device. In particular, the detecting means can be arranged in a hollow space of the storing unit for the optical device. It is to be understood, that in this case the detecting means are moved when the storing unit is moved. Such a configuration additionally enables the compact design of the measuring apparatus. Furthermore, such a configuration allows a calibration of the optical device and the detecting means prior to the installation of the storing unit for the optical device in embodiments in which the storing unit is exchangeable.

The storing unit for the optical device can comprise means to interact with means comprised by the rotatable support for the storing unit, in other words, the storing unit for the optical device and the rotatable support for the storing unit for the optical device can comprise means which are compatible with each other. Such means can be configured to establish a mechanical or electrical interaction between the storing unit for the optical device and the rotatable support for the storing unit. Such compatible means allow a high control of the movement of the storing unit for the optical device caused by a movement of the rotatable support and additionally enhances the compact design of the measuring apparatus.

The storing unit for the optical device can comprise electrical connecting means. Especially when the storing unit for the optical device comprises the detecting means, electrical connecting means provided with the storing unit for the optical device further enhance the compact design of the measuring apparatus. Such electrical connecting means can be configured for signal or data transfer, power supply and/or exchange with an analysis unit.

The storing unit for the optical device can comprise mechanical connecting means, configured to interact with mechanical connection means comprised by the rotatable support for the storing unit for the optical device. Such mechanical connecting means are configured to ensure a reliable mounting of the storing unit on the rotatable support, especially when the rotatable support is moved.

The storing unit for the optical device can also comprise locking means, i.e. means which enable the locking of a storing unit on the rotatable support for the storing unit for the optical device. Preferably, the rotatable support for the storing unit for the optical device comprises locking means configured to interact with the locking means of the storing unit for the optical device in such an embodiment. Such interacting locking means are preferably configured to fix the storing unit on the rotatable support for the storing unit for the optical device.

The storing unit for the optical device can comprise orientation means. The orientation means are configured to facilitate an easy and guided mounting of the storing unit for the optical device on the rotatable support for the storing unit and to ensure the appropriate orientation of the storing unit for the optical device on the rotatable support. Preferably, the rotatable support for the storing unit comprises orientation means configured to interact with the orientation means of the storing unit in such an example. Such a configuration allows a precise control of the movement of the storing unit for the optical device when it is driven by the movement of the rotatable support.

Preferably, the storing unit for the optical device comprises means for identification. Such means allow an easy linkage with information about the optical device stored on the storing unit for the optical device, for example calibration or length data. The means for identification of the storing unit can be a selected from the group comprising printed means, for example barcodes or QR codes or electronic means, for example chips or RFID tags, labeling and combinations thereof.

The measuring apparatus also comprises a rotatable support for the storing unit for the optical device, on which the storing unit for the optical device can be mounted. This configuration demands the rotatable support of the storing unit to be installed in a non-stationary configuration, i.e. it is installed in a way that it can be moved, especially rotated.

Furthermore, the rotatable support for the storing unit for the optical device is configured to be moved by a motor. It is to be understood, that in such a configuration the movement of the rotatable support of the storing unit, i.e. a rotation, leads to a rotation of the storing unit for the optical device. In other words, a driving of the rotatable support directly leads to a driving of the storing unit for the optical device. This configuration enables that the optical device is not drawn from the storing unit but pushed forward.

The rotatable support for the storing unit for the optical device can be formed of a single part or a plurality of parts. For example, the part or parts can be rod shaped, bar shaped or wheel shaped. The cross-section of the part or parts can have any geometry, for example be round, elliptical, square shaped or rectangular shaped. In a preferred embodiment, the diameter of the part or parts increases towards one direction, in other words, the part or parts do not have a uniform diameter.

The rotatable support for the storing unit for the optical device can comprise electrical connecting means. Thus, the compact design of the measuring apparatus can be further enhanced.

The rotatable support for the storing unit for the optical device can comprise orientation means. The orientation means are configured to facilitate an easy and guided mounting of the storing unit for the optical device and to ensure the appropriate orientation of the storing unit on the rotatable support. Additionally, it ensures a stress-free connection of electrical connections between the storing unit for the optical device and the rotatable support.

The rotatable support for the storing unit for the optical device can comprise locking means, i.e. means which enable the locking of the storing unit for the optical device on the rotatable support.

The measuring apparatus comprises moving means adapted to feed and retract the optical device. A moving means is to be understood as a means configured to cause an active movement of the optical device. In order to move the optical device, a mechanical contact between the moving means and the optical device has to be established to some extent. In particular, the moving means is adapted to drive the support for the storing unit of the optical device and feed the optical device. The moving means can also move the optical device in the opposite direction, e.g. retract it. Usually, the optical device is retracted in a direction away from a molten metal bath after a measurement sequence is finished. It is to be understood, that the moving means causes the movement of the optical device along the immersion path. Feeding in the sense of the present invention means a movement of the optical device, during operation typically towards a molten metal bath. Retracting is to be understood as a movement in the opposite direction. The feeding is connected to an uncoiling of the optical device from the storing unit, while retracting is connected to a recoiling onto the storing unit, i.e. a re-location of at least of a portion of the optical device which has previously been uncoiled.

In particular, the moving means can be configured to move the optical device with a minimal exposure of the optical device to frictional or twisting forces. During the movement, the leading tip of the optical device can be immersed below the surface of the molten metal bath, where temperature information can be obtained.

The moving means can furthermore be configured to adjust the feeding speed of the optical device. The feeding speed, i.e. the speed with which an increment of the optical device moves, can be in the range of 0.1 to 5.0 m/s.

The moving means can also be configured to adjust the acceleration of the optical device. The acceleration of the feeding speed can be up to 25 m/s². A fast acceleration allows a precise control of the feeding and retracting of the optical device.

The moving means comprises at least one motor for forward and backward driving the rotatable support for the storing unit for the optical device.

The motor for driving the rotatable support for the storing unit for the optical device allows an efficient and controlled rotational movement of the storing unit. The motor for driving the rotatable support for the storing unit can change the rotational movement speed as appropriate, and functions as a part of a feeding speed adjustment mechanism.

The at least one motor for driving the rotatable support for the storing unit may be a servo motor and/or comprise a servo drive so as to monitor the motor position.

The moving means comprises a feeding means for feeding the optical device. The feeding means is driven by at least one motor for forward and backward driving. The motor for driving the feeding means can change the movement speed of the optical device as suite and is a further part of the feeding speed adjustment mechanism.

To enable feeding, the optical device is guided through the feeding means, in other words, the immersion path leads through the feeding means. Preferably, the feeding means is in contact with the optical device.

The feeding means can be configured to move the optical device in a straight manner, i.e, without a rotational, curved or bent movement. In other words, the immersion path of the optical device is straight when passing the feeding means.

In a preferred embodiment, the length of the immersion path between the storing unit of the optical device and the feeding means is in the range of 10 cm to 100 cm. Thus, the length of the uncoiled portion of the optical device on the immersion path is minimized.

The at least one motor for driving the feeding means can be configured to detect a blockage on or of the immersion path.

The at least one motor for driving the feeding means may be a servo motor and/or comprise a servo drive so as to monitor the motor position.

Preferably, the feeding means comprises at least one pair of facing wheels. Preferably, the at least one pair of facing wheels is driven by the at least one motor of the feeding means, i.e. all wheels or at least one wheel are rotated by the motor. The wheels are preferably arranged to compressively fit the optical device. The optical device is such driven by the rotation of the wheels in response to the motor driving the feeding means.

The wheels of the feeding means can have circumferential grooves, which are configured to accommodate the optical device. The most appropriate shape and geometry of the grooves of the wheels depends on the optical device applied for the temperature measurement. Preferably, the grooves of the wheels are u-shaped. The surface of the grooves of the wheels can have a flat or a corrugated surface. Such a configuration allows the feeding of the optical device without slipping.

Preferably, the grooves of the wheels have a diameter which is larger than the diameter of the optical device. Preferably, the grooves of the wheels have a diameter which is up to 5 % larger than the outer diameter of the optical device. It can be preferred, that the depth of the grooves of the wheels is smaller than the diameter of the optical device. Preferably, the grooves of the wheels have a depth which is up to 5 % smaller than the diameter of the optical device. Preferably, the grooves of the wheels have a diameter which is up to 5 % larger than the outer diameter of the optical device and a depth which is up to 5 % smaller than the diameter of the optical device. Thus, a void space which is built by the grooves when a pair of such wheels is arranged in a fitting or near-fitting configuration has an elliptical shape. Thus, the optical device is compressively fit during the feeding and retracting operation.

According to a preferred embodiment, the feeding means can comprise more than one pair of wheels.

The more than one pair of wheels of the feeding means can have the same or different configurations.

In a preferred embodiment, the at least one pair of wheels of the feeding means are spring loaded. In other words, at least one of the wheels is mounted in a fixed manner and the at least one other wheel is arranged opposite to the fixed wheel and is movable and held in position by an elastic spring. The spring-loaded configuration allows an optimal guiding of the optical device without the application of unnecessary pinch forces. Preferably, the pinching pressure applied by the spring-loaded wheels is adjustable.

The measuring apparatus can further comprise control means, configured to control the activities of the at least one motor for forward and backward driving the rotatable support for the storing unit for the optical device and the at least motor for forward and backward driving the feeding means. In particular, the control means can be an electronic control device such as a microcontroller, a programmable logic controller (PLC) or a computer.

Preferably, the control means is configured to coordinate the activities of the at least one motor for forward and backward driving the rotatable support for the storing unit for the optical device and the at least one motor for forward and backward driving the feeding means. Coordination in this context means, that none of the motors is driven separately. This driving has not necessarily to be synchronized, i.e. being initiated exactly at the same point in time. It can also be preferred, that the movement of one of the motors is started a distinct period before the movement of the other motor. Such a coordination allows for a controlled feeding and retracting of an optical device without the build-up of uncontrolled free length. Such free length can form loops or slings, which can cause blockage of the immersion path or a loss of precise immersion control.

Furthermore, the measuring apparatus comprises a straightening means. A straightening means is a component which can only straighten and/or rotate due to interactions, particularly frictional forces, with the optical device. Preferably, the straightening is conducted by a plastic deformation of the optical device. It is to be understood, that the immersion path of the optical device leads through the straightening means.

Preferably, the straightening means is non-motor driven. A non-motor-driven straightening means allows a measuring apparatus with a minimal number of components interacting with the optical device that has to be coordinated or synchronized actively and allows a reliable operation of the measuring apparatus.

Preferably, the straightening means can be configured to keep direct contact with the optical device from two opposed sides. In such a configuration, the straightening means can be understood as a half straightening means, since typically, a straightening means contacts an optical device from more than two opposite sides.

Preferably, the straightening means comprises at least two wheels, preferably more than two wheels. In one embodiment, the at least two wheels are arranged along the immersion path of the optical device with a distance, i.e. their rotational axis are not on a common axis perpendicular to the immersion path.

The pair or pairs of wheels of the straightening means can have the same or different configurations.

Preferably, the straightening means is positioned behind the moving means on the immersion path, in particular behind the feeding means. In other words, an optical device is guided and/or moved through the straightening means after it was guided and/or moved through the feeding means along the immersion path. In this way, the optical device is actively moved only near to its storing position on the storing unit.

In a preferred embodiment, the length of the immersion path between the feeding means and the straightening means is in the range of 10 cm to 100 cm. Thus, the length of the uncoiled portion of the optical device on the immersion path is minimized.

Preferably, the wheels of the feeding means are arranged with an angle between 70° to 90° to the non-motor driven straightening means. The angle between the two means is to be understood as the angle between their central axis. The respective central axis is an axis perpendicular to the immersion path.

The measuring apparatus comprises a housing. The term "housing" is to be understood as an enclosure that shields its interior against an outer influence, respectively disruptions, which may in the present case stop the process of feeding and retracting of the optical device. Especially in metallurgical facilities, the surrounding can be a harsh environment, for example due to the process-inherent high temperatures and omnipresent dirt and scrap.

The housing encloses the detecting means, the storing unit for the optical device, the rotatable support for the storing unit for the optical device, the moving means, and the straightening means. This allows a compact design of measuring apparatus. The combination of this compact design with the configuration of the moving means, i.e. an active driving of the rotatable support of the storing unit in conjunction with movement of the storing unit of the optical device, actively driven feeding means and an adjacent straightening was surprisingly found to be essential for a controlled immersion of the optical device with a relatively thin outer metal tube.

It is to be understood, that the housing also covers at least a portion of the optical device, in particular the coiled portion. Preferably, at least sections of the uncoiled portion, i.e. of the immersion path, are covered by the housing.

Preferably, the housing comprises at least one opening, through which the optical device can be moved.

Preferably, the height of the housing corresponds to the outer diameter of the storing unit for the optical device. Preferably, the height of the housing is in the range of 1.2 to 2 times the outer diameter of the storing unit for the optical device, preferably in the range of 1.3 to 1.8 times.

The housing can have doors for ease of maintenance or safety reasons.

The housing can be thermally insulated. The housing walls can be double-layered. In a preferred embodiment, the void space between a double-layered housing wall is filled with a fire-resistant material.

The housing can be foreseen with acclimatization means, e.g. for cooling and heating. In a preferred embodiment, the housing is air-conditioned. In this way, the housing is protected against overheating. Overheating may disturb the process of feeding and retracting the optical device. Further, the air conditioning prevents condensation.

In a preferred embodiment, the housing comprises a gas connection port, i.e. the housing can be pressurized or purged. This embodiment allows to further protect the interior of the housing from environmental ingress, for example of dust and dirt particles.

Preferably, the housing comprises at least one cabinet.

In a preferred embodiment, the housing comprises a cabinet especially comprising a first accessible compartment for the storing unit and the rotatable support for the storing unit for the optical device, the moving means and the straightening means and a second compartment for an electrical equipment of the measuring apparatus. In this way, the moving means and the storing unit and thus the coiled portion of the optical device are separated from other components. The first compartment is accessible for an end-user and thus not closed for example by a lock. As a result, an end user can insert or replace the storing unit for the optical device if necessary.

Preferably, the second compartment comprising an electrical equipment of the measuring apparatus is closed for example by a door lock. As a result, the electrical equipment is well protected which avoids a disturbance for example due to misuse.

In one embodiment the storing unit and the rotatable support for the storing unit for the optical device and all components of the moving means are arranged in a single cabinet, thus not in separated units. The storing unit and components of the moving means, in particular the feeding means and the straightening means can be arranged in different compartments of a single cabinet.

In one embodiment, the storing unit for the optical device and the rotatable support for the storing unit for the optical device, components of the moving means and the straightening means are at least partly arranged in different cabinets, thus in separated units. Preferably, these separate units are connected by means of a connecting tube. Such a configuration allows a modular design of the measuring apparatus.

The measuring apparatus according to the invention also comprises a guiding system. A guiding system is to be understood as a system which passively guides the optical device without actively moving or influencing it. In other words, the guiding system does not comprise motors, feeding means or straightening means. The guiding system is configured to ensure that the optical device is protected from the environment as soon as it is moved out of the housing. The guiding system serves for guiding the optical device into the molten metal bath and/or out of the molten metal bath inside the vessel. It is to be understood, that the immersion path leads trough the guiding system and is therefore determined by its configuration and geometry. The guiding system comprises an inlet and an outlet to enable the feeding of the optical device through it.

One end of the guiding system can comprise an immersion end in feeding direction of the immersion path. The immersion end can be located inside a vessel containing a molten metal bath. It is therefore preferably configured to withstand the conditions inside of such a vessel. Configured to withstand such conditions means resistant to temperatures of for example molten steel.

Preferably, the immersion end of the guiding system is arranged above the molten metal bath, of which the temperature is to be measured. In other words, the optical device is immersed into the molten metal bath from above.

Preferably, the immersion path of optical device first leads through the feeding means, afterwards through the straightening means and subsequently through the guiding system.

It can be advantageous, that the curvature of the guiding system is configured to guide the optical device without bending or kinking. In other words, the guiding system guides the immersion path of the optical device such that the optical device is guided with a minimum exposure to bending forces. Preferably, the coiled portion of the optical device is arranged in at least one winding, preferably in multiple windings, on the storing unit for the optical device, and a minimal radius of the curvature of the guiding system is larger than 4-times the radius of an inner winding of the optical device on the storing unit for the optical device.

Preferably, the guiding system comprises at least one section which is straight, i.e. not curved. Preferably, the last section of the guiding system is straight, i.e. the section prior to the outlet of the guiding system.

Preferably, the guiding system has a circular cross-section in its longitudinal direction.

Preferably, the ratio of the inner diameter of the guiding system and the diameter of the outer metal tube of the optical device is not larger than 2, in particular, the ratio is in the range of 1.2 to 1.9.

The guiding system is connected to the housing. Such a configuration allows an immersion of the optical device without uncovered portions of at least the first two sections of the immersion path.

Preferably, the guiding system is connected to the housing by a connector. A connector allows a modular design of the measurement apparatus.

In a preferred embodiment, the guiding system comprises at least two individual components, which are separably connected to each other. Such a configuration allows a modular construction of the measuring apparatus, enabling cleaning and troubleshooting.

Preferably, the guiding system comprises at least one guiding tube. If the guiding system comprises more than one guiding tube, it can be preferred that the more than one guiding tubes can be interconnected in a detachable manner.

In a preferred embodiment, the at least one guiding tube is formed from metal.

Preferably, the ratio of the inner diameter of the at least one guiding tube and the diameter of the outer metal tube of the optical device is not larger than 2, in particular, the ratio is in the range of 1.2 to 1.9.

In a preferred embodiment, the inner diameter of the at least one guiding tube is below 20 mm, preferably below 16 mm. Preferably, the inner diameter of the at least one guiding tube is in the range of 4 mm to 20 mm, more preferred in the range of 4 to 18 mm.

Preferably, the minimal radius of the curvature of the immersion path is larger than 10-times the inner diameter of the at least one guiding tube, more preferred 30-times larger, most preferred 50-times larger. Such a ratio allows an immersion of the optical device without bending.

Preferably, the minimal radius of the curvature of the at least one guiding tube is larger than 4-times the radius of the inner winding of the optical device on the storing unit for the optical device.

Preferably, the length of the at least one guiding tube is not more than 200 cm, preferably not more than 100 cm.

Preferably, the guiding system comprises an injection system. In such a configuration, the injection system comprises the last section of the immersion path of the optical device before it is immersed into the molten metal bath.

The injection system is preferably composed of steel and/or a ceramic material.

Preferably, the injection system ends with a straight portion, i.e. the optical device is not bent prior to entering the molten metal bath. Thus, the optical device can be immersed along a straight immersion path into the molten metal bath and retracted back from the molten metal bath. The mechanical properties of the optical device change due to the heat to which the optical device is subjected during temperature measurement and/or the subsequent cooling. In particular, its flexibility increases. Guiding the optical device without bending on the last section of the immersion path avoids permanent deformation and, thus, wear, stress and friction of the optical device, ingress of material present inside the vessel and blocking of the injection system. Further unwanted movement of the optical device is also prevented.

In a preferred embodiment, the guiding system comprises at least one guiding tube and an injection system which are connected. Such a configuration ensures an immersion of the optical device with a minimal portion of unprotected sections on the immersion path. Preferably, the injection system is connected to the at least one guiding tube with a connector.

Preferably, the at least one guiding tube has a straight portion adjacent to the injection system, i.e. the immersion path is not curved in this section.

Preferably, the injection system comprises a gas inlet, which can be connected to a gas supply means. Thus, the immersion system can be purged with a gas while in operation.

Preferably, the injection system comprises a blowing lance. A blowing lance is a lance through which purge gas can be blown into a metallurgical vessel. This can help prevent penetration of metal, slag and/or debris into the injection system. The purge gas additionally cools the blowing lance and/or the optical device therein.

Typically, the blowing lance is straight, i.e. not curved, for guiding the optical device along a straight immersion path towards the molten metal bath. The blowing lance may be manufactured in one piece. The blowing lance is in particular arranged coaxial to the guiding system and/or axially adjacent to the guiding system.

In one embodiment, an end of the blowing lance which is directed or directable towards the vessel and/or the molten metal bath contained therein is realized as a de Laval nozzle. This enables a purge gas flow to be introduced into the vessel at a high speed and/or supersonic speed. Thus, slag covering the molten metal bath below the optical device can be displaced before and/or while immersion of the optical device. Thus, blocking of the blowing lance and the guiding system is impeded. In addition, the optical device is cooled even inside the vessel such that its durability is increased, and a particularly accurate temperature measurement is enabled.

The measuring apparatus can further comprise means to identify the position of the leading tip of the optical device. The knowledge of the position of the leading tip of the optical device further enhances the precision with which the optical device can be immersed. Especially in measurement sequences which comprise several steps of feeding and retracting the optical device with certain immersion speeds for certain time frames, the knowledge of the position of the leading tip of the optical device can be an essential input parameter to ensure high quality measurements.

Suitable means to identify the position of the leading tip optical device are not further restricted, for example the means can be sensing means or cutting means. Since the position of the means within the measuring apparatus is known, this also leads to a knowledge of the position of the leading tip of the optical device.

Preferably, means to identify the position of the leading tip optical device are arranged on, in or at the guiding system.

In embodiments in which the measuring apparatus comprises control means, the control means can be configured to interact with the means to identify the position of the leading tip of the optical device.

The measuring apparatus can comprise cutting means, configured to cut the optical device. A cutting of the optical device can become necessary if unforeseen blockage of the immersion path occurs or a fresh leading tip of the optical device needs to be generated. A cutting can also be employed to gain knowledge of the position of the leading tip of the optical device, i.e. identify the position of the leading tip of the optical device. Preferably, the cutting means is arranged on, in or at the guiding system.

The measuring apparatus can further comprise sensing means for sensing the presence of the optical device. Sensing a presence of the optical device means detecting an information relating to whether or not the optical device is present at a certain position. This can be realized in that a part of the sensing means is positioned in a known fixed position within the measuring apparatus. The sensing means can in particular be configured to detect the position of the leading tip of the optical device

The sensing means can comprise an inductive sensor or a sensor for measuring the property of a gas flow.

In the case of a sensor for measuring the property of a gas flow, the sensing means is in particular configured for measuring a flow rate of the gas flow, a flow velocity of the gas flow and/or a gas pressure in the gas flow. Thus, a gas flow is used to detect the presence of the optical device. In particular, a gas flow is realized in or close to the guiding system such that the presence of the optical device influences the gas flow, e.g. by obstructing at least a part of the flow path of the gas flow. By measurement of the property, the presence of the optical device can be sensed. The guiding system may comprise a suitable gas source. The sensing means may be positioned close to the guiding system or at a remote position, being connected with a gas line. Typically, gas lines are highly temperature-resistant.

In an exemplary embodiment in which the measuring apparatus comprises control means, the control means can be configured for controlling the sensing means. It can be advantageous, that the control means are configured to control the activity of the motors of the moving means in coordination with the sensing means.

In a further embodiment, the measuring apparatus can comprise monitoring means to monitor the movement of the optical device, for example an encoder or inductive switches. Such monitoring means can be configured to monitor the movement of the optical device and thus allow a comparison of the intended movement with the actual movement of the optical device. Any displacement of the optical device, e.g. due to blocking, which cannot be detected otherwise, can thus still be measured.

Preferably, the monitoring means is positioned behind the moving means in the direction of the immersion path. This enables a particularly precise and disturbance-free monitoring of the movement of the optical device and high immersion control. The monitoring means may be configured to monitor the distance that the optical device is moved from a known starting point. The starting point can be defined by a position of the leading tip of the optical device detected by a means to identify the position of the leading tip of the optical device, in particular by a sensing means. Thus, after a position measurement, the monitoring device ensures that the position of the leading tip is known during subsequent movement of the optical device.

In an exemplary embodiment in which the measuring apparatus comprises control means, the control means can be configured for controlling the monitoring means. Preferably, the control means is configured to compare the position of the optical device as detected by the monitoring means with the position detected by a servo-motor of the moving means. Thus, a potential displacement of the optical device, a blockage of the guiding system or high wear or friction can be identified.

The measuring apparatus can also comprise an analysis unit for data analysis.

The measuring apparatus can also include a control panel which allows user input or adjustments, for example in form of control features such as switches, keyboards or knobs. The control panel is preferably arranged on or at the housing.

The measuring apparatus can include displaying means, which can provide system feedback to a user. The displaying means is preferably arranged on or at the housing.

The measuring apparatus can in particular be installed in a stationary manner. Preferably, the measuring apparatus is configured such that it can be positioned on an outer wall of a metallurgical vessel or on a platform on a side of a metallurgical vessel, if present. If positioned on an outer wall, the measuring apparatus may be installed on an eccentric bottom tap (EBT) platform or at a side wall of the metallurgical vessel. The optical device can thus be moved into the vessel from the stationary point. The platform can be a part of the side wall and/or essentially horizontally aligned. In particular, the entry point of the vessel is positioned on the platform and/or is an essentially vertically aligned opening.

A further aspect of the invention is a method for measuring the temperature of a molten metal bath with the measuring apparatus according to the invention.

The method comprises at least the steps of
(i) feeding the optical device;
(ii) measuring the temperature of the molten metal bath;
(iii) retracting and recoiling the optical device.

All features, advantages and embodiments mentioned in relation to the measuring apparatus according to the invention also apply to the above aspect of the invention and to the method, and vice versa.

Surprisingly it was found that a recoiling of the optical device in conjunction with its retracting leads to a higher reliability when the measurement apparatus is used, especially when the method is performed several times.

The method comprises feeding of the optical device.

It is to be understood, that the feeding step comprises the activity of the at least one motor for driving the rotatable support for the storing unit for the optical device and the activity of the at least one motor for forward and backward driving of the feeding means.

Preferably, the activities of the at least two motors of the moving means are coordinated. It can be advantageous, that the activity of the at least one motor for forward and backward driving the rotatable support for the storing unit for the optical device is initiated prior to the activity of the at least one motor for forward and backward driving of the feeding means. Thus, some length of the optical device is de-coiled from the storing unit for the optical device before the feeding means actively moves the optical device. It has been found that such a coordinated activity enhances the precision and reliability of the method.

The method comprises measuring the temperature of the molten metal bath. To measure the temperature, the radiation emitted by the molten metal bath, especially in the IR wavelength range, and conveyed a by the optical device to a detecting means is recorded. The intensity and/or spectral information of the radiation may be processed by a processing unit connected to the detecting means.

During the measurement step, the optical device can be at least partly consumed.

The method comprises retracting and recoiling the optical device. It is to be understood that a recoiling while retracting the device means, that a length of the uncoiled portion of the optical device which was not consumed during the measurement step is relocated on the storing unit for the optical device. Even though the optical device is consumed at the leading tip which is located in the molten metal bath and not near the storing unit, the consumed length directly influences the length of the uncoiled portion of the optical device which can be recoiled.

It is to be understood, that the retracting and recoiling step comprises the activity of the at least one motor for forward and backward driving the rotatable support for the storing unit for the optical device and the activity of the at least one motor for forward and backward driving of the feeding means.

Preferably, the method according to the invention is performed more than once.

Preferably, the method further comprises at least one step of identifying the position of the leading tip of the optical device. The identifying can be performed by means to identify the position of the leading tip of the optical device which is located at an identifying position.

The identifying of the position of the leading tip of the optical device can be performed prior to and/or during the step of feeding the optical device.

The identifying the position of the leading tip of the optical device can be performed during and/or after the step of retracting and recoiling the optical device. Preferably, the leading tip of the optical device is retracted to an identifying position. Thus, a retracting of the optical device further than necessary can be avoided.

The method can further comprise a further step of retracting the optical device further than to an identifying position, stopping the retracting of the optical device and feeding the optical device to an identifying position again. Preferably, the velocity of the retracting movement is higher than the velocity of the feeding movement. Such an additional step allows a precise positioning of the optical device, especially of the leading tip. In particular, the additional step is advantageous when the method is performed more than once.

The idea underlying the invention shall subsequently be described in more detail with respect to exemplary embodiments shown in the figures. Features of the exemplary implementation can be combined individually or in a plurality with the claimed objects, unless otherwise indicated. The claimed scopes of protection are not limited to the exemplary implementation.

Herein:
- Figure 1: shows schematic views of consumable optical devices.
- Figure 2: illustrates an exemplary installation of a measuring apparatus.
- Figure 3: shows an exemplary measurement apparatus according to the invention.
- Figure 4: shows a detailed view of a coil, carrying a pyrometer.
- Figure 5: shows a simplified view of a measuring apparatus to illustrate the immersion path of the optical device and its curvature.
- Figure 6 A: shows a possible configuration of a feeder with two pairs of rollers.
- Figure 6 B: illustrates a possible configuration of the wheels of the feeder.
- Figure 6 C: shows the configuration of two wheels of a feeder.
- Figure 7: shows the configuration of a feeder and a straightener.
- Figure 8 A: shows a possible configuration of a straightener with a straight immersion path of the optical device.
- Figure 8 B: shows a possible configuration of a straightener with a meandering immersion path of the optical device.
- Figure 9: shows a configuration of a measuring apparatus with a sensor for the location of the leading tip.
- Figure 10: shows an exemplary measurement apparatus with a cutting means.

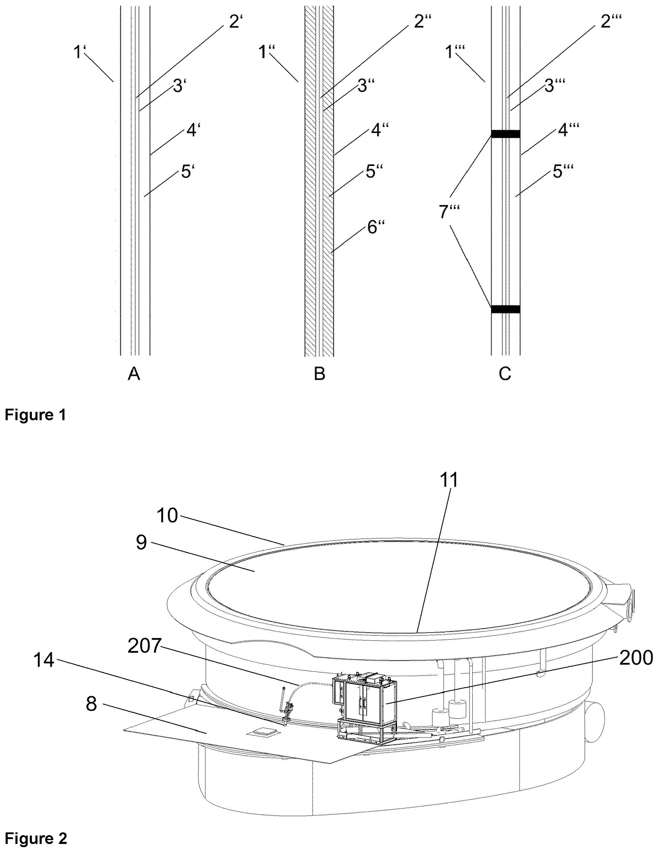

Figure 1 shows schematic views of consumable optical devices (1', 1", 1‴) which can be employed in a measuring apparatus according to the invention. An optical fiber 2', 2", 2‴ is surrounded by an inner metal tube 3', 3", 3‴ and an outer metal tube 4', 4", 4"'. The void space between the metal tubes 5', 5", 5‴ can be filled with a filler material 6", as shown in Figure 1 B. Figure 1 C shows a configuration of an optical device 1‴ with separating elements 7‴ arranged around the inner metal tube 3‴ and inside the outer metal tube 4‴.

Figure 2 illustrates an exemplary installation of a measuring apparatus 200 on a platform 8 located at the metallurgical vessel 9 of an electric arc furnace (EAF) 10. Due to the compact and robust design, the whole measuring apparatus 200 can be located close to the site of operation. This location minimizes the required space for the installation of the apparatus 200 and the length of optical device 1 which is in operation. The platform 8 comprises a hole 14 leading inside the vessel 9 to which the guiding system 207 of the measuring apparatus 200 is connected. Inside the vessel 9, the optical device 9 enters the molten metal bath 11 (not visible in the view of Figure 2).

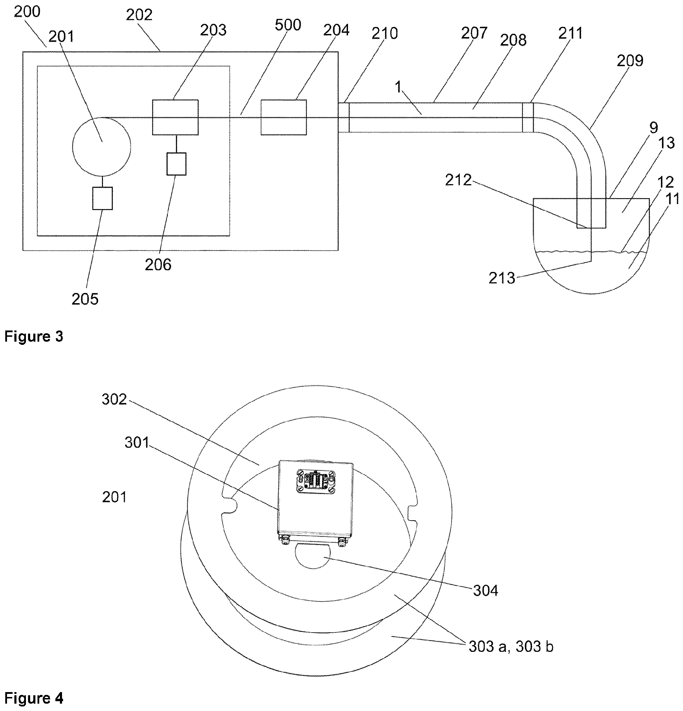

Figure 3 shows an exemplary measurement apparatus 200 according to the invention in more detail. An optical device 1, arranged on a coil 201, is installed on a rotatable support (not shown) in a housing 202. The coil 201 also carries a detector (not shown), which is connected to the optical device 1. Conveniently, mechanical and electrical contact is established between support and coil 201. The coil 201 can be exchanged when the optical device 1 is consumed after operation of the measuring apparatus 200.

Figure 4 shows a detailed view of a coil 201, carrying a detecting unit 301, comprising for a example a pyrometer. The coil 201 has a hollow cylindrical core 302 around which the optical device 1 can be wound. The coil 201 has two side panels 303 a, 303 b, which extend from the cylindrical core 302 and ensure that the optical device 1 does not slip from the core 302. In the shown configuration, the detecting unit 301 is installed in the hollow part of the cylindrical core 302. The coil 201 also comprises a part 304 which can be connected, i.e. mounted to or on a rotatable support.

The housing 202 also contains a feeder 203 and a straightener 204, as well as a first motor 205 for driving the coil support and a second motor 206 for driving the feeder 203. The motors driving the support of the coil 205 and the feeder 206 cause the active movement of the optical device 1 and together form the moving system. A guiding system 207 is connected to the housing 202, optionally with a connector 210. The guiding system 207 comprises a guiding tube 208 and an injection system 209, also optionally connected with a connector 211. The diameter of the guiding system 207 must be chosen rather small, ideally not larger than twice the diameter of the outer diameter of the optical device 1. Such a configuration allows the passive guidance of the optical device 1 without breaks or blockage of the immersion path 500.

Figure 3 also shows an exemplary metallurgical vessel 9, which contains a molten metal bath 11. The measuring apparatus 200 is located or installed in such a way, that the optical device 1 is immersed into the molten metal bath 11 from above after it leaves the guiding system 207. Between the exit of the guiding system 212 and the surface of the molten metal bath 12, the optical device 1 typically needs to travel through a hot atmosphere 13 and a slag layer (not shown) covering the molten metal bath 11. Typically, the slag does not have a constant volume, and at times during steel processing it will foam and expand in volume. It can therefore be advantageous, that the injection system 209 is equipped with a blowing lance (not shown), which is purged with a gas flow. In such a configuration, the constant purge of gas can ensure that the opening of the guiding system 212 is not blocked by solidified slag and/or chilled droplets of molten metal. An additional benefit of the purge gas is to keep the guiding system 207 as well as the unused portion of the optical device 1 cool and thus promotes the longevity of guiding system 207 and at the same time prevents the devitrification of the unused optical fiber of the optical device 1. Preferably, the gas pressure is maintained between at least 2 bar and/or at most 5 bar which facilitates sufficient cooling to maintain an undevitrified fiber.

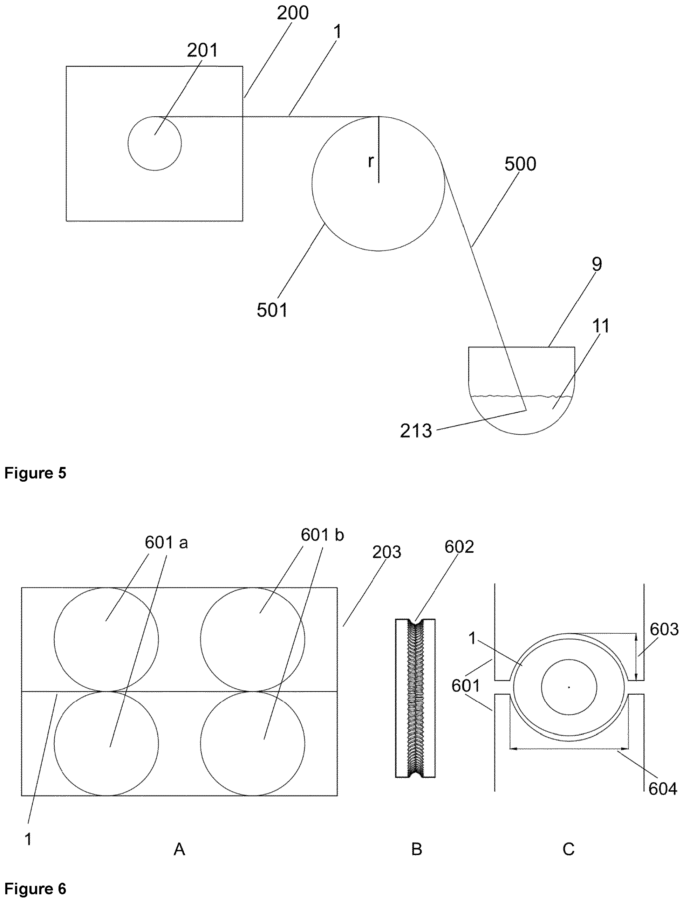

Figure 5 shows a simplified view of a measuring apparatus 200 to illustrate the immersion path 500 of the optical device 1 and its curvature. The immersion path is the to be understood as the route which every increment of the uncoiled portion of the optical device 1 follows when it is uncoiled from the coil 201 until it enters the molten metal bath 11. The immersion path 500 of the optical device 1 starts from the coil 201 and leads through the feeder 203, the straightener 204 and the guiding system 207 into the molten metal bath 11 contained in a metallurgical vessel 9. The curvature can be defined by the radius of a circle 501, which is fitted to the immersion path 500. This characteristic radius has to be chosen in relation to the characteristics of the optical device 1 and the dimension and radius of the coil 201 on which it is stored. A radius which is too small will lead to a higher probability of excessive bending and breakage of the optical device.

Prior to or during immersion, the optical device 1 can be damaged or deconstructed, for example by skull formation or unmolten parts in the metal bath 11. Such factors can lead to a bending and or breaking of the optical device 1, especially when it is fed with high speeds.

The configuration shown in Figure 3 illustrates the system during a measurement sequence with the leading tip 213 of the optical device 1 immersed under the surface of the molten metal bath 12. A measurement sequence to obtain a temperature with an apparatus 200 according to the invention comprises the feeding of the optical device 1, the recording of a measuring signal and the retracting of the optical device 1 The feeding and retracting can comprise several steps, defining the speeds and durations of the movement of the optical device 1 to obtain optimal measuring results. The exact parameters of such a measurement sequence depend, among others, on the material of the molten metal, its temperature, and the circumstances of the metallurgical facility. During feeding and retracting, the mass of the support for the coil and the coil 201 need to be accelerated and deaccelerated. The higher the mass of these components, the higher the inertia during this stage.

In general, the optical device 1 is moved with its leading tip 213 at the immersion end towards the molten metal bath 11. The two motors 205 and 206 can accurately control the feeding velocity of the optical device 1. Since the feeding is based on a push-and-pull mechanism, i.e. the motor-driven storing unit 205 pushes and a separate motor-driven feeder 203 pulls the optical device 1 in a coordinated manner, the forces the outer metal tube of the optical device 1 are exposed to can be minimized.

Figure 6 A shows a possible configuration of a feeder 203 with two pairs of rollers 601 a, 601 b. The wheels or each pair of rollers 601 a, 601 b are arranged opposing each other with the optical device 1 arranged between them during operation. The wheels are spring-loaded with an adjustable force pinching the optical device, thereby supporting the torsion-free movement with minimal pinching forces while still contributing to a straightening. Figure 6 B illustrates a possible configuration of the wheels. The exemplary wheel has a cylindrical u-shaped groove 602 and a corrugated surface. Typically, the wheels are arranged in such a way, that the void space formed between them through which the optical device 1 is led has a slightly elliptical shape, as shown in Figure 6 C. The configuration of the distance of the pair of rollers 601 and the shape of their grooves allows a slight deformation of the outer tube of the optical device 1 during feeding and therefore allows a first straightening. Figure 6 C further illustrates the constructional characteristics of the wheels, i.e. the depth 603 and diameter 604 of the grooves.

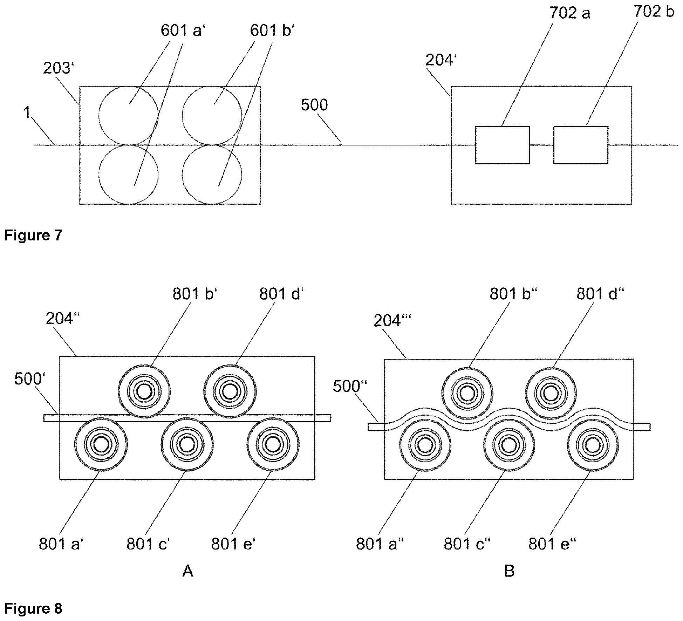

After the feeder 203, 203', the immersion path 500 of the optical device 1 leads through a straightener 204, 204' on a straight axis without curvature, as shown in more detail in Figure 7. A straightening of the optical device 1 ensures that bending or twisting caused by the coiled storage of the optical device 1 on the coil 201 is at least reduced or eliminated.

Figure 8 shows possible configurations of a straightener. In Figure 8 A, the five wheels 801 a', 801 b', 801 c', 801 d', 801 e' of the straightener 204" are arranged with an offset relative to each other in the direction of the immersion path 500'. In the embodiment shown in Figure 8 B, the wheels 802 a", 802 b", 802 c", 802 d", 802 e" of the straightener 204‴ are arranged such that the immersion path 500" is not straight, put follows a meandering line.

Figure 7 illustrates the configuration of a feeder 203' with two pairs of rollers 601 a', 601 b' and a straightener 204‴ with two pairs of rollers 702 a, 702 b in relation to the immersion path 500. It is advantageous that the feeder 203' and straightener 204' are positioned in a minimal distance. Furthermore, it has been found that a perpendicular relation of these two components results in an effective straightening of a fragile optical device 1 with a minimum amount of applied forces. Figure 7 shows such a perpendicular configuration from a front view, in particular, the wheels of the rollers 601 a', 601 b' 702 a, 702 b of the components 203', 204' are arranged perpendicular to each other. This enables on the one hand a reduction of twisted bending of the optical device 1 and on the other hand a minimized number of components needed for an efficient operation of the measuring apparatus.

After a measurement sequence, the portion of the optical device 1 immersed in the molten metal bath 11 will be molten and thereby consumed. After the measurement is taken, a length of the optical device located in the hot atmosphere 13 inside the metallurgical vessel 9 can be retracted towards the direction of the coil 201 and can be reused for the next measurement sequence.

In order to obtain reliable temperature measurements, it is desired to measure at a more or less fixed immersion depth in the molten metal bath 11. Furthermore, the control of the landing point, i.e. the point on the surface of the molten metal bath 12 where the leading tip 213 is immersed, is a parameter which requires control for precise measurement results. The landing point can for example be shifted due to feeding of the optical device 1 which is not on a straight immersion path 500 or which has been bent, twisted, or otherwise deformed prior to the immersion.

The above given explanations illustrate, that the optical device 1 is constantly uncoiled and recoiled during operation of the measuring apparatus 200, potentially leading to uncoiled portions of the optical device 1 prone to damages, requiring a highly controlled and precise feeding in both directions. Additionally, the length and with it the weight of the optical device 1 constantly changes due to the consumption during each measurement sequence.

The configuration of the measurement apparatus 200 according to the invention compromises the need for control and precision with a minimal impact on the optical device 1. The length of the uncoiled portion of the optical device 1 is kept at a minimal level which is nearly fully covered by components of the apparatus prior to the immersion of the optical device into the molten metal bath.

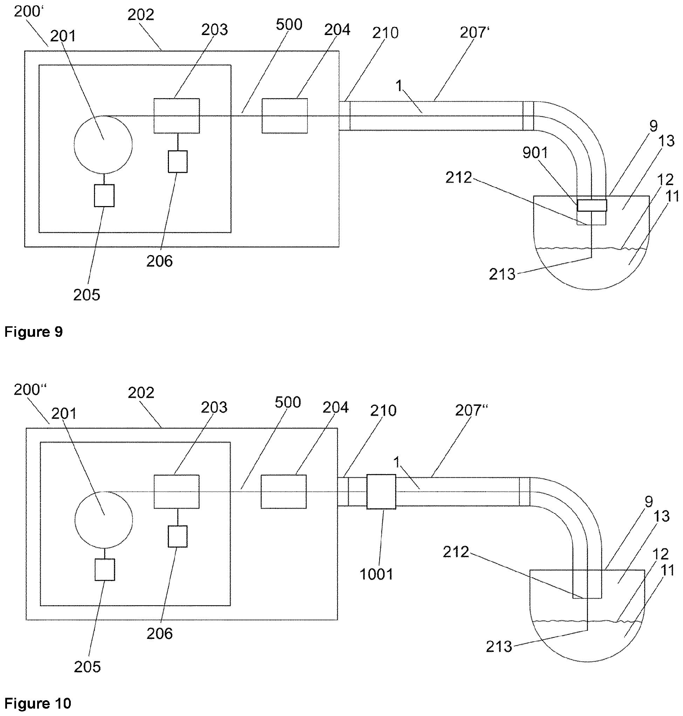

Figure 9 shows a configuration of a measuring apparatus 200' with a sensor 901 for the location of the leading tip 213 of the optical device 1, located at the end of the guiding system 207'. Other locations of the sensor 901 are also possible. An additional sensor enables a higher control of the whole apparatus 200' and further enhances the precision of the measurement sequences and the obtainable results.

Figure 10 shows a configuration of a measuring apparatus 200" with a guiding system 207" comprising cutting means 1001. A cutting of the optical device 1 at a certain position allows on the one hand to resolve occurring blockages and on the other hand can be utilized to determine the position of the leading tip of the optical device 1. In case of the shown embodiment, a cut portion of the uncoiled portion of the optical device 1 will be pushed forward and out of the guiding system 207" by the following portion of the optical device 1, which is moved by the measuring apparatus 200".

### List of Reference Numerals

- 1, 1', 1", 1‴: Optical device
- 2', 2", 2‴: Optical fiber
- 3', 3", 3‴: Inner metal tube
- 4', 4", 4‴: Outer metal tube
- 5', 5", 5‴: Void Space
- 6": Filler material
- 7‴: Separating Elements
- 8: Platform
- 9: Metallurgical vessel
- 10: Electric Arc Furnace (EAF)
- 11: Molten metal bath
- 12: Surface of molten metal bath
- 13: Atmosphere inside vessel
- 14: Hole in vessel platform
- 200, 200', 200": Measuring apparatus
- 201: Coil
- 202: Housing
- 203,203': Feeder
- 204, 204', 204", 204‴: Straightener
- 205: Motor for driving the coil support
- 206: Motor for driving the feeder
- 207, 207', 207": Guiding system
- 208: Guiding tube
- 209: Injection system
- 210: Connector
- 211: Connector
- 212: Exit of guiding system
- 213: Leading tip of optical device
- 301: Detecting unit
- 302: Cylindrical core of coil
- 303 a; 303 b: Side panels of coil
- 304: Connection to rotatable support
- 500, 500', 500": Immersion path
- 501: Circle with radius of curvature of immersion path
- 601, 601 a, 601 b, 601 a', 601 b': Pairs of rollers of feeder
- 602: Groove of wheel
- 603: Depth of wheel grooves
- 604: Diameter of wheel grooves
- 701: Portion of immersion path between feeder and straightener
- 702 a, 702 b: Pairs of rollers of straightener
- 801 a', 801 b', 801 c', 801 d', 801 e': Straightener wheels
- 802 a", 802 b", 802 c", 802 d", 802 e": Straightener wheels
- 901: Sensor
- 1001: Cutting means

## Claims

1. Measuring apparatus (200, 200', 200") for measuring a temperature of a molten metal bath (11), comprising
i) an optical device (1, 1', 1", 1‴),
ii) a detecting means (301), which is adapted to receive a light signal transmitted by the optical device (1, 1', 1", 1‴),
iii) a storing unit for the optical device (201),
iv) a rotatable support for the storing unit for the optical device,
v) a moving means,
vi) a straightening means (204, 204', 204", 204‴),
vii) a housing (202) and
viii) a guiding system (207, 207', 207") connected to the housing,
wherein the optical device (1, 1', 1", 1‴) comprises an optical fiber (2', 2", 2‴) laterally surrounded by an inner and an outer metal tube (3', 3", 3‴; 4', 4", 4‴),
wherein the outer metal tube (4', 4", 4‴) has an outer diameter in the range of 2 mm to 8 mm and a wall-thickness in the range of 0.1 mm to 0.6 mm,
wherein the housing (202) encloses the detecting means (301), the storing unit for the optical device (201), the rotatable support for the storing unit for the optical device, the moving means, and the straightening means (204, 204', 204", 204‴) and
wherein the moving means is adapted to feed and retract the optical device (1, 1', 1", 1") and comprises
a) at least one motor for forward and backward driving the rotatable support for the storing unit for the optical device (205),
b) a feeding means (203, 203') for feeding the optical device (1, 1', 1", 1‴) driven by at least one motor for forward and backward driving (206).

2. The measuring apparatus (200, 200', 200") according to claim 1, wherein the optical device (1, 1', 1", 1‴) comprises a coiled portion and an uncoiled portion, and wherein the uncoiled portion defines the immersion path (500, 500', 500") of the optical device (1, 1', 1", 1‴).

3. The measuring apparatus (200, 200', 200") according to claim 2, wherein the immersion path does not comprise portions which are kinked.

4. The measuring apparatus (200, 200', 200") according to claim 2 or 3, wherein the immersion path (500, 500', 500") does not comprise a curvature with a radius smaller than 200-times the outer diameter of the optical device (1, 1', 1", 1‴).

5. The measuring apparatus (200, 200', 200") according to any of claims 2 to 4, wherein the immersion path (500, 500', 500") starts at the end of the outer winding of the optical device (1, 1', 1", 1‴) on the storing unit for the optical device (201).

6. The measuring apparatus (200, 200', 200") according to any of the preceding claims,
wherein the coiled portion of the optical device (1, 1', 1", 1‴) is arranged in at least one winding, preferably in multiple windings, on the storing unit for the optical device (201) and wherein a minimal radius of the curvature of the guiding system (207, 207', 207") is larger than 4-times the radius of an inner winding of the optical device (1, 1', 1", 1‴).

7. The measuring apparatus (200, 200', 200") according to any of the preceding claims,
wherein the guiding system (207, 207', 207") comprises at least one guiding tube (208).

8. The measuring apparatus (200, 200', 200") according to the preceding claim, wherein the ratio of the inner diameter of the at least one guiding tube (208) and the diameter of the outer metal tube (4', 4", 4‴) of the optical device (1, 1', 1", 1‴) is not larger than 2.

9. The measuring apparatus (200, 200', 200") according to any of the preceding claims,
wherein the height of the housing (202) is in the range of 1.2 to 2 times the outer diameter of the storing unit for the optical device (201).

10. The measuring apparatus (200, 200', 200") according to any of the preceding claims,
wherein the measuring apparatus (200, 200', 200") comprises control means, configured to control the activities of the at least one motor for forward and backward driving the rotatable support for the storing unit for the optical device (205) and the at least one motor for forward and backward driving the feeding means (206).

11. The measuring apparatus (200, 200', 200") according to the preceding claim, wherein the control means is configured to coordinate the activities of the at least one motor for forward and backward driving the rotatable support for the storing unit for the optical device (205) and the at least motor for forward and backward driving the feeding means (206).

12. The measuring apparatus (200, 200', 200") according to any of the preceding claims,
wherein the measuring apparatus (200, 200', 200") comprises means (901) to identify the position of the leading tip of the optical device (213).

13. The measuring apparatus (200, 200', 200") according to any of the preceding claims,
wherein the detecting means (301) is arranged on, in or at the storing unit for the optical device (201).

14. Method for measuring the temperature of a molten metal bath (11) with a measuring apparatus (200, 200', 200") according to any of the preceding claims, comprising at least the steps of
(i) feeding the optical device (1, 1', 1", 1‴);
(ii) measuring the temperature of the molten metal bath (11);
(iii) retracting and recoiling the optical device (1, 1', 1", 1‴).

15. The method according to claim 14, wherein the method further comprises at least one step of identifying the position of the leading tip of the optical device (213).

## Patentansprüche

1. Messeinrichtung (200, 200', 200") zum Messen einer Temperatur einer Metallschmelze (11), umfassend
i) eine optische Vorrichtung (1, 1', 1", 1‴),
ii) ein Erfassungsmittel (301), das geeignet ist, ein Lichtsignal, das durch die optische Vorrichtung (1, 1', 1", 1‴) ausgesendet wird, zu empfangen,
iii) eine Aufbewahrungseinheit für die optische Vorrichtung (201),
iv) eine drehbare Halterung für die Aufbewahrungseinheit für die optische Vorrichtung,
v) ein Bewegungsmittel,
vi) ein Geraderichtungsmittel (204, 204', 204", 204‴),
vii) ein Gehäuse (202) und
viii) ein Führungssystem (207, 207', 207"), das mit dem Gehäuse verbunden ist,
wobei die optische Vorrichtung (1, 1', 1", 1‴) eine optische Faser (2', 2", 2"'), die durch ein inneres und ein äußeres Metallrohr (3', 3", 3"'; 4', 4", 4"') seitlich umgeben ist, umfasst, wobei das äußere Metallrohr (4', 4", 4"') einen Außendurchmesser in dem Bereich von 2 mm bis 8 mm und eine Wandstärke in dem Bereich von 0,1 mm bis 0,6 mm aufweist, wobei das Gehäuse (202) das Erfassungsmittel (301), die Aufbewahrungseinheit für die optische Vorrichtung (201), die drehbare Halterung für die Aufbewahrungseinheit für die optische Vorrichtung, das Bewegungsmittel und das Geraderichtungsmittel (204, 204', 204", 204‴) umschließt, und
wobei das Bewegungsmittel geeignet ist, die optische Vorrichtung (1, 1', 1", 1‴) vorzuschieben und zurückzufahren, und umfasst
a) mindestens einen Motor zum Vorwärts- und Rückwärtsantreiben der drehbaren Halterung für die Aufbewahrungseinheit für die optische Vorrichtung (205),
b) eine Vorschubeinrichtung (203, 203') zum Vorschieben der optischen Vorrichtung (1, 1', 1", 1‴), die durch mindestens einen Motor zum Vorwärts- und Rückwärtsantreiben (206) angetrieben wird.

2. Messeinrichtung (200, 200', 200") nach Anspruch 1, wobei die optische Vorrichtung (1, 1', 1", 1‴) einen gewickelten Abschnitt und einen nicht gewickelten Abschnitt umfasst, und wobei der nicht gewickelte Abschnitt den Immersionspfad (500, 500', 500") der optischen Vorrichtung (1, 1', 1", 1‴) definiert.

3. Messeinrichtung (200, 200', 200") nach Anspruch 2, wobei der Immersionspfad keine Abschnitte, die geknickt sind, umfasst.

4. Messeinrichtung (200, 200', 200") nach Anspruch 2 oder 3, wobei der Immersionspfad (500, 500', 500") keine Krümmung mit einem Radius aufweist, der kleiner als das 200-fache des Außendurchmessers der optischen Vorrichtung (1, 1', 1", 1‴) ist.

5. Messeinrichtung (200, 200', 200") nach einem der Ansprüche 2 bis 4, wobei der Immersionspfad (500, 500', 500") an dem Ende der äußeren Windung der optischen Vorrichtung (1, 1', 1", 1‴) auf der Aufbewahrungseinheit für die optische Vorrichtung (201) beginnt.

6. Messeinrichtung (200, 200', 200") nach einem der vorstehenden Ansprüche, wobei der gewickelte Abschnitt der optischen Vorrichtung (1, 1', 1", 1‴) in mindestens einer Windung, vorzugsweise in vielfachen Windungen, auf der Aufbewahrungseinheit für die optische Vorrichtung (201) angeordnet ist, und wobei ein minimaler Radius der Krümmung des Führungssystems (207, 207', 207") größer als der 4-fache Radius einer inneren Windung der optischen Vorrichtung (1, 1', 1", 1‴) ist.

7. Messeinrichtung (200, 200', 200") nach einem der vorstehenden Ansprüche, wobei das Führungssystem (207, 207', 207") mindestens ein Führungsrohr (208) umfasst.

8. Messeinrichtung (200, 200', 200") nach dem vorstehenden Anspruch, wobei das Verhältnis des Innendurchmessers des mindestens einen Führungsrohrs (208) und des Durchmessers des äußeren Metallrohrs (4', 4", 4‴) der optischen Vorrichtung (1, 1', 1", 1") nicht größer als 2 ist.

9. Messeinrichtung (200, 200', 200") nach einem der vorstehenden Ansprüche, wobei die Höhe des Gehäuses (202) in dem Bereich des 1,2- bis 2-fachen des Außendurchmessers der Aufbewahrungseinheit für die optische Vorrichtung (201) liegt.

10. Messeinrichtung (200, 200', 200") nach einem der vorstehenden Ansprüche, wobei die Messeinrichtung (200, 200', 200") ein Steuermittel umfasst, das konfiguriert ist, um die Aktivitäten des mindestens einen Motors zum Vorwärts- und Rückwärtsantreiben der drehbaren Halterung für die Aufbewahrungseinheit für die optische Vorrichtung (205) und des mindestens einen Motors zum Vorwärts- und Rückwärtsantreiben des Vorschubmittels (206) zu steuern.

11. Messeinrichtung (200, 200', 200") nach dem vorstehenden Anspruch, wobei das Steuermittel konfiguriert ist, um die Aktivitäten des mindestens einen Motors zum Vorwärts- und Rückwärtsantreiben der drehbaren Halterung für die Aufbewahrungseinheit für die optische Vorrichtung (205) und des mindestens einen Motors zum Vorwärts- und Rückwärtsantreiben des Vorschubmittels (206) zu koordinieren.

12. Messeinrichtung (200, 200', 200") nach einem der vorstehenden Ansprüche, wobei die Messeinrichtung (200, 200', 200") ein Mittel (901) zum Identifizieren der Position der vorderen Spitze der optischen Vorrichtung (213) umfasst.

13. Messeinrichtung (200, 200', 200") nach einem der vorstehenden Ansprüche, wobei das Erfassungsmittel (301) auf, in oder an der Aufbewahrungseinheit für die optische Vorrichtung (201) angeordnet ist.

14. Verfahren zum Messen der Temperatur einer Metallschmelze (11) mit einer Messeinrichtung (200, 200', 200") nach einem der vorstehenden Ansprüche, umfassend mindestens die Schritte
(i) Vorschieben der optischen Vorrichtung (1, 1', 1", 1‴);
(ii) Messen der Temperatur der Metallschmelze (11);
(iii) Zurückfahren und Aufwickeln der optischen Vorrichtung (1, 1', 1", 1‴).

15. Verfahren nach Anspruch 14, wobei das Verfahren ferner mindestens einen Schritt zum Identifizieren der Position der vorderen Spitze der optischen Vorrichtung (213) umfasst.

## Revendications

1. Appareil de mesure (200, 200', 200") permettant de mesurer une température d'un bain de métal fondu (11), comprenant
i) un dispositif optique (1, 1', 1", 1‴),
ii) un moyen de détection (301), qui est conçu pour recevoir un signal de lumière transmis par le dispositif optique (1, 1', 1", 1"'),
iii) une unité de stockage pour le dispositif optique (201),
iv) un support rotatif pour l'unité de stockage pour le dispositif optique,
v) un moyen de déplacement,
vi) un moyen de redressement (204, 204', 204", 204‴),
vii) un logement (202) et
viii) un système de guidage (207, 207', 207") relié au logement,
dans lequel le dispositif optique (1, 1', 1", 1‴) comprend une fibre optique (2', 2", 2"') entourée latéralement par un tube métallique interne et un externe (3', 3", 3"'; 4', 4", 4"'), dans lequel le tube métallique externe (4', 4", 4"') a un diamètre externe dans la plage de 2 mm à 8 mm et une épaisseur de paroi dans la plage de 0,1 mm à 0,6 mm,
dans lequel le logement (202) renferme le moyen de détection (301), l'unité de stockage pour le dispositif optique (201), le support rotatif pour l'unité de stockage pour le dispositif optique, le moyen de déplacement et le moyen de redressement (204, 204', 204", 204'") et
dans lequel le moyen de déplacement est conçu pour avancer et rétracter le dispositif optique (1, 1', 1", 1‴) et comprend
a) au moins un moteur permettant d'entraîner vers l'avant et vers l'arrière le support rotatif pour l'unité de stockage pour le dispositif optique (205),
b) un moyen d'avance (203, 203') permettant d'avancer le dispositif optique (1, 1', 1", 1‴) entraîné par au moins un moteur pour un entraînement vers l'avant et vers l'arrière (206).

2. Appareil de mesure (200, 200', 200") selon la revendication 1, dans lequel le dispositif optique (1, 1', 1", 1‴) comprend une partie enroulée et une partie non enroulée, et dans lequel la partie non enroulée définit le chemin d'immersion (500, 500', 500") du dispositif optique (1, 1', 1", 1‴).

3. Appareil de mesure (200, 200', 200") selon la revendication 2, dans lequel le chemin d'immersion ne comprend pas de parties qui sont coudées.

4. Appareil de mesure (200, 200', 200") selon la revendication 2 ou 3, dans lequel le chemin d'immersion (500, 500', 500") ne comprend pas de courbure avec un rayon inférieur à 200 fois le diamètre externe du dispositif optique (1, 1', 1", 1‴).

5. Appareil de mesure (200, 200', 200") selon l'une quelconque des revendications 2 à 4, dans lequel le chemin d'immersion (500, 500', 500") démarre au niveau de l'extrémité de l'enroulement externe du dispositif optique (1, 1', 1", 1‴) sur l'unité de stockage pour le dispositif optique (201).

6. Appareil de mesure (200, 200', 200") selon l'une quelconque des revendications précédentes, dans lequel la partie enroulée du dispositif optique (1, 1', 1", 1‴) est agencée en au moins un enroulement, de préférence en de multiples enroulements, sur l'unité de stockage pour le dispositif optique (201) et dans lequel un rayon minimal de la courbure du système de guidage (207, 207', 207") est supérieur à 4 fois le rayon d'un enroulement interne du dispositif optique (1, 1', 1", 1‴).

7. Appareil de mesure (200, 200', 200") selon l'une quelconque des revendications précédentes, dans lequel le système de guidage (207, 207', 207") comprend au moins un tube de guidage (208).

8. Appareil de mesure (200, 200', 200") selon la revendication précédente, dans lequel le rapport du diamètre interne de l'au moins un tube de guidage (208) et du diamètre du tube métallique externe (4', 4", 4‴) du dispositif optique (1, 1', 1", 1‴) n'est pas supérieur à 2.

9. Appareil de mesure (200, 200', 200") selon l'une quelconque des revendications précédentes, dans lequel la hauteur du logement (202) est dans la plage de 1,2 à 2 fois le diamètre externe de l'unité de stockage pour le dispositif optique (201).

10. Appareil de mesure (200, 200', 200") selon l'une quelconque des revendications précédentes, dans lequel l'appareil de mesure (200, 200', 200") comprend un moyen de commande, configuré pour commander les activités de l'au moins un moteur pour un entraînement vers l'avant et vers l'arrière du support rotatif pour l'unité de stockage pour le dispositif optique (205) et de l'au moins un moteur pour un entraînement vers l'avant et vers l'arrière du moyen d'avance (206).

11. Appareil de mesure (200, 200', 200") selon la revendication précédente, dans lequel le moyen de commande est configuré pour coordonner les activités de l'au moins un moteur pour un entraînement vers l'avant et vers l'arrière du support rotatif pour l'unité de stockage pour le dispositif optique (205) et de l'au moins un moteur pour l'entraînement vers l'avant et vers l'arrière du moyen d'avance (206).

12. Appareil de mesure (200, 200', 200") selon l'une quelconque des revendications précédentes, dans lequel l'appareil de mesure (200, 200', 200") comprend un moyen (901) pour identifier la position de l'embout de tête du dispositif optique (213).

13. Appareil de mesure (200, 200', 200") selon l'une quelconque des revendications précédentes, dans lequel le moyen de détection (301) est agencé sur, dans ou au niveau de l'unité de stockage pour le dispositif optique (201).

14. Procédé permettant de mesurer la température d'un bain de métal fondu (11) avec un appareil de mesure (200, 200', 200") selon l'une quelconque des revendications précédentes, comprenant au moins les étapes consistant à
(i) avancer le dispositif optique (1, 1', 1", 1‴);
(ii) mesurer la température du bain de métal fondu (11);
(iii) rétracter et réenrouler le dispositif optique (1, 1', 1", 1‴).

15. Procédé selon la revendication 14, dans lequel le procédé comprend en outre au moins une étape d'identification de la position de l'embout de tête du dispositif optique (213).
